# EUROPEAN PATENT APPLICATION

(11) **EP 2 316 805 A1**
(43) Date of publication of application: **04.05.2011**
(21) Application number: 10151264.8
(22) Date of filing: 21.01.2010
(51) Int. Cl.: C04B 35/484, C04B 35/486, C04B 35/653

(54) **A material based on zirconium dioxide**

(30) Priority: 29.10.2009 RU 2009139855
(71) Applicant: Golsen Limited, 3041 Limassol (CY); OOO "Novye Energeticheskie Tehnologii", 107045 Moscow (RU)
(72) Inventor: Borik, Mikhail A., 105264 Moscow (RU); Vishnyakova, Maria A., 129090 Moscow (RU); Lomonova, Elena E., 129090 Moscow (RU); Voytsitskiy, Vladimir P., 117630 Moscow (RU); Osiko, Vyacheslav V., 117420 Moscow (RU); Myzina, Valentina A., 119454 Moscow (RU)
(74) Representative: Reichert, Werner Franz

(57) **Abstract**

The invention relates to the field of synthetic materials and is industrially applicable in the manufacture of wear-resistant construction parts for use under conditions of elevated temperatures, loads, and aggressive media, for cutting and machining tools, and in medical equipment. A material based on zirconium dioxide, containing yttrium and obtained by directed crystallization from batch mixture melted in a cold container, contains at least two tetragonal phases whose axes of tetragonality are 80-90°. The components of the batch mixture for obtaining the material are contained in the following ratio (in mol %): yttrium oxide, 2.8 - 3.7; zirconium dioxide, the remainder. To obtain the material, a thermal insulating layer 4 is formed by placing tamped residual pieces of the material and a powdery batch mixture on the bottom 2 of the container. Layer 9 consists of a powdery batch mixture containing metallic zirconium 8; layer 10, of residual pieces of the material; and layer 11, of powdery batch mixture and fine residual pieces of the material. During directed crystallization the rate of displacement of the container relative to inductor 12 is varied.

## Description

The invention relates to the field of synthetic materials and is used in the manufacture of wear-resistant construction parts for use under conditions of elevated temperatures, loads, and aggressive media (bearings, thread guides, guides, milling bodies, etc.), for cutting and machining tools (cutting tools for viscous materials and wood, dies and draw plates for wires, rolls for ultrathin foils, microdrills, etc.), and in medical equipment (ultrathin scalpels for cardiac surgery, neurosurgery, vascular, maxillofacial, abdominal, and fetal surgery, and bioinert implants with high fatigue resistance for dental and orthopedic surgery).

A material is known, based on zirconium dioxide obtained from batch mixture, melted in a cold container (RU 2199616). This material consists of crystallites of a tetragonal modification of acicular or platy form that form a rectangular lattice. The material is obtained by horizontal movement of the container relative to the inductor. A drawback of this material is the relatively low values of mechanical strength and crack resistance of the material - melted zirconium dioxide - which after melting (melting temperature 2800°C) is already readily transformed from the tetragonal to the monoclinic form in the cooling process; this is accompanied by appearance of a system of cracks at the surface and in the bulk of the crystallites due to a substantial volumetric (~5 vol. %) alteration of the material in the process of the tetragonal-monoclinic phase transformation at a temperature of 1200°C.

A material based on zirconium dioxide (RU 2220674) stabilized by yttrium oxide is known. It additionally contains a metal oxide as a stabilizing component, the metal oxide being selected from a group consisting of calcium oxide, magnesium oxide, strontium oxide, scandium oxide, and oxides of rare earth elements from europium to lutetium. These components are used in the following proportion: yttrium oxide 0.5-4.5; stabilizing component, 0.1-4.5 mol %; zirconium oxide, the remainder. A drawback of this material is the relatively low values of strength, wear resistance, and crack resistance due to the existence in this range of constituents of monoclinic and cubic phases along with the tetragonal phase; this degrades the mechanical properties of the material.

A material is known, based on zirconium dioxide, containing yttrium and obtained by directed crystallization from batch mixture melted in a cold container (Martines-Fernandez, Jimenez-Melendo, Dominguez-Rodriguez, Heuer, Microindentation-Induced Transformation in 3.5-mol%-Yttria-Partially-Stabilized Zirconia Single Crystals, J. Am. Ceramic Soc'y, vol. 83, p. 547, 1993). The material obtained is subjected to annealing. It is characterized by microhardness of 1200-1300 kg/mm². A drawback of this material is the insufficiently high wear resistance that is associated, as shown in testing, with relatively low flexing strength and compression strength.

A material is known, based on zirconium dioxide, containing yttrium and obtained by directed crystallization from batch mixture melted in a cold container with cooled walls (Savage, Preparation and properties of hard crystalline materials for optical applications - a review, J. Crystal Growth, vol. 113, p. 708, 1991). It is characterized by microhardness of 1100-1200 kg/mm². A drawback of this material is the insufficiently high wear resistance that is associated, as shown in testing, with relatively high brittleness.

A known material based on zirconium dioxide, containing yttrium and obtained by directed crystallization from batch mixture melted in a cold container (RU 2157431), is closest to the material applied for. This material is obtained by vertical movement of the container relative to the inductor at a rate of 0.1 to 1.5 mm/hour. The material is subjected to annealing in air at a temperature from 800 to 1400°C for 1 to 10 hours and/or in rarefied atmosphere at a temperature from 1100 to 2100°C and a pressure from 10⁻⁴ to 10⁻¹ mm Hg for 1 to 20 hours. The batch mixture contains components in the following proportions, mol %:
yttrium oxide 0.3 - 8.0;
zirconium dioxide remainder.

To obtain the material, residual pieces of monocrystals are additionally loaded into the container. The residual pieces of monocrystals and/or batch mixture are used in a quantity ensuring a volume of melt no less than 5 L, and are loaded into a container with a diameter no less than 250 mm. Layers of thermal insulating filling of the same composition as the batch mixture are placed on the bottom of the container and above the batch mixture and of the residual pieces of monocrystals. Residual pieces of monocrystals and batch mixture are placed on the layer of thermal insulating filling on the bottom of the container. When batch mixture and residual pieces of monocrystals are used simultaneously, they are placed in layers in the form of three coaxial cylinders, where the central layer and the layer in contact with the container consist of charge, and a layer of residual pieces of monocrystals is situated between these layers.

A drawback of this close analog are the low values of strength, wear resistance, and crack resistance due to the existence in this range of constituents of monoclinic and cubic phases along with the tetragonal phase; this degrades the mechanical properties of the material.

The technical problem of optimization of the performance parameters of the material is solved by the invention applied for, including crack resistance, hardness, and wear resistance.

The objective is achieved by the fact that the known material based on zirconium dioxide, containing yttrium and obtained by directed crystallization from batch mixture melted in a cold container, contains at least two tetragonal phases whose axes of tetragonality are noncollinear.

In particular, the angle between the axes of tetragonality of the phases ranges from 80 to 90°.

In particular, the components for obtaining the material applied for are contained in the following ratio (in mol %):
yttrium oxide 2.8 - 3.7;
zirconium dioxide remainder.

In particular, the components for obtaining the material applied for consist of the following constituents (in wt %):
charge 25 - 40;
crystalline residual pieces of the material 60 - 75.

In particular, to obtain the material, residual pieces of the material are additionally placed on the bottom of the container, and a thermal insulating layer is formed by tamping them.

In particular, powdery batch mixture and residual pieces of the material are loaded by means of two shells set on the thermal insulating layer into a cold container in layers in the form of three coaxial cylinders, and the central layer consists of charge, while the layer in contact with the container consists of batch mixture and fine residual pieces of the material with dimensions no greater than 3 mm, and the batch mixture makes up 30 to 50 wt %, while the fine residual pieces of the material make up 50 to 70 wt %, and a layer of residual pieces of the material is situated between these layers.

In particular, a layer of paper is placed between the wall of the cold container and the layer in contact with the container.

In particular, metallic zirconium is placed on the axis of the central cylindrical layer.

In particular, a layer of powdery batch mixture is placed on top of all the cylindrical layers.

In particular, for the directed crystallization, the container is first moved at a rate of 2 to 4 mm/hour for 8 to 15 hours, and then at a rate of 8 to 15 mm/hour for 10 to 15 hours.

In particular, the material extracted from the container is subjected to annealing in air at a temperature from 1250 to 1400°C for 10 to 100 hours.

In particular, the material extracted from the container is subjected to annealing in rarefied atmosphere at a temperature from 2000 to 2200°C at a pressure from 10⁻⁴ to 10⁻¹ mm Hg for 2 to 10 hours.

The essence of the invention being applied for consists in the fact that it is precisely the presence in it of two tetragonal phases whose axes of tetragonality make an angle close to 90° that ensures optimization of the performance parameters of the material, including crack resistance, hardness, and wear resistance, each of which is close to the maximal value known for the given material.

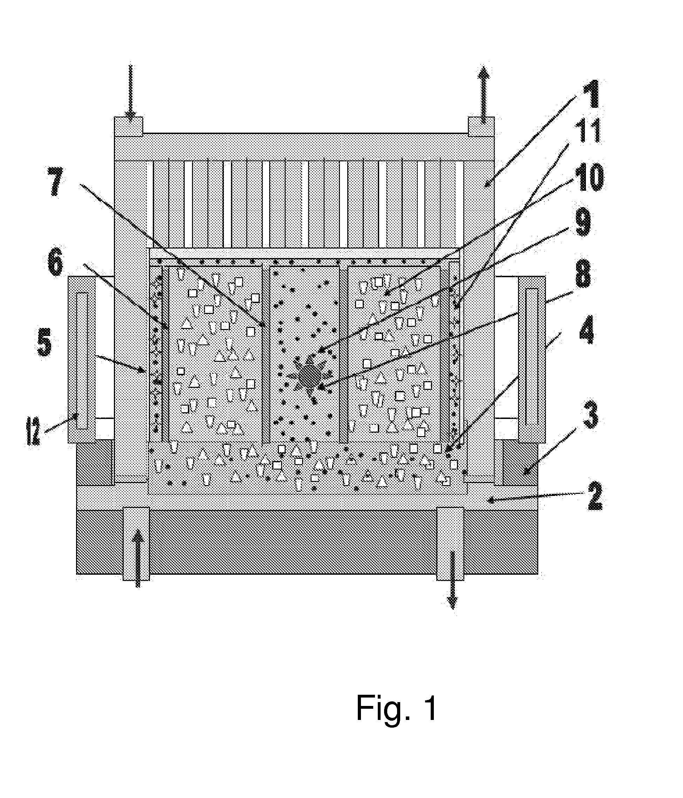

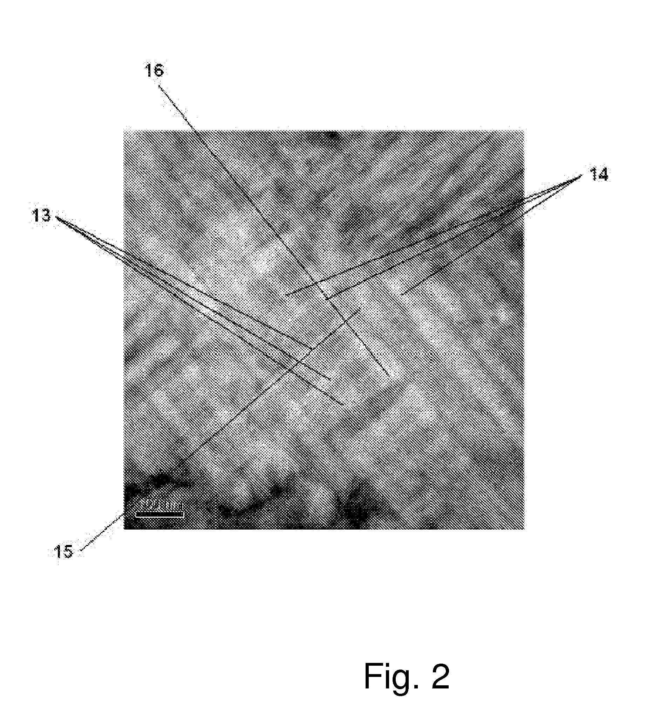

The invention is explained by the drawing (in Fig. 1), where a schematic diagram is shown of the apparatus by means of which the material being applied for is obtained, and by a photomicrograph (Fig. 2), in which the mutual disposition of the tetragonal phases in an example of a specific embodiment of the material is shown.

The apparatus (Fig. 1) contains wall 1 and bottom 2 of the cold container. Reinforcing ring 2 encompasses wall 1 of the cold container. Thermal insulating layer 4 is placed on bottom 2 of the cold container. Before loading the cold container, a layer of paper 5 as well as cylindrical copper shells 6 and 7 are placed in it. Metallic zirconium 8 is disposed on the axis of shell 7. A layer 9 of powdery charge, a layer 10 of residual pieces of the material, as well as a layer 11 containing batch mixture and fine residual pieces of the material are also shown in Fig. 1. An inductor 12 encompasses the cold container (Fig. 1).

The apparatus (Fig. 1) operates in the following manner. Thermal insulating layer 4 is formed first by placing tamped residual pieces of the material and powdery batch mixture 9, which is also tamped, on bottom 2 of the container, in this manner forming thermal insulating layer 4. Then the two cylindrical shells 6 and 7 are set on layer 4. Layer 9 of powdery batch mixture is loaded into shell 7; at the same time, metallic zirconium 8 is placed along the center of inductor 12 to provide start-up melting. Layer 10 of residual pieces of the material is loaded between shells 6 and 7. Further, the layer of paper 5 is placed between wall 1 of the container and shell 6 to prevent loss of the startup material due to spilling between the tubes constituting wall 1 of the cold container. Layer 11 consisting of batch mixture and fine residual pieces of the material with dimensions no greater than 3 mm is loaded between layer of paper 5 and shell 6. After the completion of the annular loading, shells 6 and 7 are removed from the cold container. The powdery batch mixture is placed on the upper surface of the annular loading to prevent radiation losses in the start-up melting period.

Inductor 12 is connected to a high-frequency generator and is mounted such that its lower edge is at the level of the upper part of thermal insulating layer 4. The melting of layers 9 and 10, initiated by melted metal 8, is effected in the high-frequency field with simultaneous water cooling of wall 1 and bottom 2 of the container. Under the influence of local heating, the batch mixture in contact with metal 8 melts and begins to absorb the energy of the high-frequency field, as a result of which the melt zone enlarges. As a result, the melt and lining slag are produced in the container of the batch mixture formed from the non-melted part and fine crystalline residual pieces in the layer 11 in contact with the wall 1 of the cold container. In the process of melting the charge, metal 8 is oxidized up to the formation of zirconium dioxide. After melting, the melt and lining slag are maintained at constant temperature for 3-4 hours, and then directed crystallization of the melt is carried out by means of displacement of the cold container relative to inductor 12.

At first the container is displaced at a rate of 2 to 4 mm/hour for 8 to 15 hours. The nucleation of crystals takes place in the process in thermal insulating layer 4, and directed crystallization of the melt begins. Then the rate of displacement of the container is increased to 8-15 mm/hour, and further growth of the crystals occurs therewith. After the boule obtained within the container is cooled, crystals of zirconium dioxide-based material containing yttrium are extracted from it.

Annealing in vacuum, in inert atmosphere, or in air is carried out if necessary (to release stresses and obtain material that is uniform in mechanical characteristics, to change color, to modify mechanical characteristics, etc.).

A photomicrograph obtained by transmission electronic microscopy of an example of a specific embodiment of the material is shown in Fig. 2. It is seen that the material contains two phases 13 and 14 whose form is close to rectangular. Axis 15 of one phase 13 and axis 16 of the other phase 14 make an angle close to 90°.

Examples of a specific embodiment are given below.

Strength was characterized by the bending strength limit σₘ; crack resistance by the critical coefficient of stress intensity, K_{1C}; and wear resistance by wear intensity, I, for friction on steel without lubrication. Typical values of these parameters known from state of the art for zirconium dioxide-based material stabilized by yttrium are σₘ = 400-1000 MPa (Metselaar H.C.S., Kerkwijk B., Mulder E.J. et al. Wear of ceramics due to thermal stresses: a thermal severity parameter. Wear, 249, 962-970, 2002); K_{1C} = 7-10 MPa m^{1/2} (Metselaar H.C.S., Kerkwijk B., Mulder E.J. et al. Wear of ceramics due to thermal stresses: a thermal severity parameter. Wear, 249, 962-970, 2002); and I = 2.4 × 10⁻⁷ - 2.4 × 10⁻⁴ (Medevielle A., Tevenot F., Treheux F. Wear resistance of zirconias. Dielectrical approach. Wear, 213, 13-20, 1997).

### Example 1

Components containing 92 mol % ZrO₂ and 8 mol % Y₂O₃ were loaded into a cold container according to the closest analog. Crystalline residual pieces weighing 15 kg including 92 mol % ZrO₂ and 8 mol % Y₂O₃ and powdery batch mixture weighing 65 kg were used. Crystallization was carried out in a container 180 mm in diameter. Material containing only one cubic phase was obtained.

The material obtained was characterized by the following performance parameter values: σₘ = 243 MPa, K_{1C} = 1.8 MPa m^{1/2}, I = 2.73·10⁻⁸ at a pressure p = 5 MPa and relative velocity v = 2 m/sec.

### Example 2

According to the invention being applied for, components totaling 80 kg in weight, containing 96.8 mol % ZrO₂ and 3.2 mol % Y₂O₃, were loaded into a cold container. In this case, the powdery batch mixture of the initial oxides weighed 30 kg, and the crystalline residual pieces of the same composition weighed 50 kg. The diameter of the cold container was 400 mm. Crystalline residual pieces of the same composition weighing 43 kg and powdery batch mixture weighing 5 kg, which after tamping formed thermal insulating layer 4, were placed on the bottom of the container.

The initial powdery batch mixture and the crystalline residual pieces were loaded by means of two copper shells 6 and 7 set on the thermal insulating layer 4 into the cold container in layers in the form of three coaxial cylinders, where the central layer 9 consists of a powdery charge, a layer 11 in contact with the container consists of batch mixture and fine residual pieces of the material with dimensions no greater than 3 mm in the identical proportion, and a layer of residual pieces 10 is situated between these layers. A layer of paper 5 was placed between the wall 1 of the container and layer 11 to prevent loss of the startup material due to spilling between the tubes of the cold container (the spaces between the tubes range from 3 to 5 mm). Metallic zirconium weighing 300 g was placed in the center of layer 9 (along the vertical, at the middle of inductor 12) to provide start-up melting. After the completion of the annular loading, shells 6 and 7 were removed from the cold container. Ten kg of the powdery batch mixture were placed on the upper surface of the annular loading to prevent radiation losses in the start-up melting period. After melting of the charge, the container with the melt was maintained at constant parameters of the high-frequency generator for 3 hours. For the directed crystallization, the container was first moved at a rate of 3 mm/hour for 10 hours, and then at a rate of 8 mm/hour for 10 hours.

After the boule of melt was cooled, crystals of the material obtained were extracted from the container. Annealing in vacuum or in air was carried out if necessary (to release stresses and obtain material that is uniform in mechanical characteristics, to change color, to modify mechanical characteristics, etc.).

The material obtained contained two tetragonal phases whose axes of tetragonality made an angle of 86° (Fig. 2) and was characterized by the following performance parameter values: σₘ = 1100 MPa, K_{1C} = 14.2 MPa m^{1/2}, I = 3.20 × 10⁻⁹ (at p = 5 MPa and v = 2 m/sec).

### Example 3

The same as in example 2, but the cold container was loaded with components totaling 80 kg in weight, containing 97.2 mol % ZrO₂ and 2.8 mol % Y₂O₃.

The material obtained contained two tetragonal phases whose axes of tetragonality made an angle of 87° and was characterized by the following performance parameter values: σₘ = 1200 MPa, K_{1C} = 12.1 MPa m^{1/2}, I = 4.28 × 10⁻⁹ (at p = 5 MPa and v = 2 m/sec).

### Example 4

The same as in example 2, but the cold container was loaded with components totaling 80 kg in weight, containing 96.3 mol % ZrO₂ and 3.7 mol % Y₂O₃.

The material obtained contained two tetragonal phases whose axes of tetragonality made an angle of 88° and was characterized by the following performance parameter values: σₘ = 1000 MPa, K_{1C} = 11.1 MPa m^{1/2}, I = 2.50 × 10⁻⁹ (at p = 5 MPa and v = 2 m/sec).

### Example 5

The same as in example 2, but the cold container was loaded with components totaling 80 kg in weight, containing 98 mol % Zr0₂ and 2 mol % Y₂0₃.

The material obtained contained two tetragonal phases whose axes of tetragonality made an angle of 85.8° and one monoclinic phase. It was characterized by the following performance parameter values: σₘ = 500 MPa, K_{1C} = 6.4 MPa m^{1/2}, I = 8.78 × 10⁻⁸ (at p = 5 MPa and v = 2 m/sec).

The specific embodiment examples given attest to the fact that the objective - optimization of the performance parameters of the material, including crack resistance, hardness, and wear resistance - is achieved through the implementation of the invention being applied for.

## Claims

1. A composition comprising zirconium dioxide and yttrium
the composition being produced by directed crystallization using a batch mixture melted in a cold container,
the composition having at least two tetragonal phases with noncollinear axes of tetragonality.

2. The composition of claim 1, wherein the angle between the at least two axes of tetragonality is from 80 ° to 90°.

3. The composition of claim 1, wherein the batch mixture comprises from 2.8 mol % to 3.7 mol % yttrium oxide and zirconium dioxide comprising the remainder.

4. The composition of claim 3,
wherein crystalline discards of the composition are placed on a bottom of the container, and
wherein a thermal insulating layer is formed by tamping the crystalline discards of the composition.

5. The composition of claim 4, wherein the batch mixture comprises from 25% to 40% by weight and crystalline discards of the composition comprises from 60% to 75% by weight.

6. The composition of claim 5,
wherein the batch mixture and the crystalline discards of the composition are loaded into the cold container in layers as three coaxial cylinders by two shells set on the thermal insulating layer,
wherein a central layer comprises the batch mixture,
wherein a layer in contact with the container comprises the batch mixture from 30% to 50% by weight and discards of the composition no greater than 3 mm from 50% to 70% by weight, and
wherein a layer of discards of the composition is located between the central layer and the layer in contact with the container.

7. The composition of claim 6, wherein a layer of paper is placed between a wall of the cold container and the layer in contact with the container.

8. The composition of claim 6, wherein metallic zirconium is placed on an axis of the central cylindrical layer.

9. The composition of claim 6, wherein a layer of powdery batch mixture is placed on top of the cylindrical layers.

10. The composition of claim 1, wherein during the directed crystallization, the container is first moved at a rate of 2 to 4 mm/hour for 8 to 15 hours and then at a rate of 8 to 15 mm/hour for 10 to 15 hours.

11. The composition of claim 10, wherein the composition extracted from the container is subjected to annealing in air at a temperature from 1250 to 1400°C for 10 to 100 hours.

12. The composition of claim 10, wherein the composition extracted from the container is subjected to annealing in rarefied atmosphere at a temperature from 2000 to 2200°C at a pressure from 10⁻⁴ to 10⁻¹ mm Hg for 2 to 10 hours.
